# EUROPÄISCHE PATENTSCHRIFT

(11) **EP 2 848 376 B1**
(45) Veröffentlichungstag und Bekanntmachung des Hinweises auf die Patenterteilung: **06.06.2018**
(21) Anmeldenummer: 14181562.1
(22) Anmeldetag: 20.08.2014
(51) Int. Cl.: B25J 15/02

(54) **Greifeinrichtung**
Gripping device
Dispositif préhenseur

(30) Priorität: 03.09.2013 DE 102013217474
(43) Veröffentlichungstag der Anmeldung: 18.03.2015
(73) Patentinhaber: Schunk GmbH & Co. KG Spann- und Greiftechnik, 74348 Lauffen am Neckar (DE)
(72) Erfinder: Becker, Ralf, 71672 Marbach (DE)
(74) Vertreter: DREISS Patentanwälte PartG mbB

(56) Entgegenhaltungen:
- DE-A1-102011 117 407
- JP-A- S61 230 894
- JP-A- S62 132 005

## Beschreibung

Die Erfindung betrifft eine Greifeinrichtung mit einem Gehäuse und wenigstens einer im Gehäuse entlang einer Verfahrrichtung verfahrbaren Backe. Mit derartigen Greifeinrichtungen könnten Gegenstände gegriffen oder auch gespannt werden. Derartige Greifeinrichtungen sind beispielsweise aus der DE 197 04 444 C1 oder der DE 196 04649 C2 vorbekannt. Aus der US 2001/0024045 A1 ist eine Greifeinrichtung bekannt, bei der an einem Kolben ein senkrecht dazu abstehender Pin vorgesehen ist.

Andere Greifeinrichtungen sind aus der DE 10 2011 117 407 A1 bekannt. Bei diesen Greifeinrichtungen weisen die Backen jeweils mehrere das Gehäuse durchgreifende Führungssäulen auf.

Der vorliegenden Erfindung liegt die Aufgabe zugrunde, eine Greifeinrichtung der eingangs beschriebenen Art vorzuschlagen, die einen vergleichsweise einfachen Aufbau aufweist, die ausreichend hohe Greifkräfte zur Verfügung stellt und mit der Gegenstände sicher gegriffen oder gespannt werden können.

Diese Aufgabe wird mit einer Greifeinrichtung mit den Merkmalen des Anspruchs 1 gelöst. Eine solche Greifeinrichtung sieht folglich vor, dass die Backe einen Kolbenabschnitt aufweist, der einen im Gehäuse vorgesehenen Druckraum begrenzt. Ferner ist vorgesehen, dass die Backe einen das Gehäuse durchgreifenden Endabschnitt mit einem runden Querschnitt aufweist, wobei der Endabschnitt exzentrisch zum Kolbenabschnitt angeordnet ist. Folglich ist die Mittellängsachse des Endabschnitts zur Mittellängsachse des Kolbenabschnitts parallel und beabstandet angeordnet. Dadurch können in den Endabschnitt eingeleitet Querkräfte über den Kolbenabschnitt in das Gehäuse abgeleitet werden, wodurch eine Verdrehsicherung bereitgestellt werden kann.
Dadurch, dass der Endabschnitt einen runden Querschnitt aufweist, ist es dennoch möglich, eine ausreichende Dichtung zwischen dem Endabschnitt und dem Gehäuse bereitzustellen.
Es kann vorgesehen sein, dass der Kolbenabschnitt eine Mantelfläche aufweist und dass der Endabschnitt eine Mantelfläche aufweist, wobei die Mantelfläche des Kolbenabschnitts die Mantelfläche des Endabschnitts umfüllt. Die Mantelfläche des Endabschnitts liegt dann innerhalb der Mantelfläche des Kolbenabschnitts.
Ferner ist vorteilhaft, wenn der Kolbenabschnitt im Querschnitt kreisrund, oval oder rechteckig mit abgerundeten Ecken ausgebildet ist. Selbst dann, wenn der Kolbenabschnitt im Querschnitt kreisrund ist, können in den Endabschnitt eingeleitete Querkräfte über den Kolbenabschnitt sicher ins Gehäuse abgeleitet werden. Durch Vorsehen eines rechteckigen Querschnitts mit abgerundeten Ecken kann bei Vorsehen eines im Querschnitt rechteckigen Gehäuses die Leistungsdichte der Greifeinrichtung erhöht werden.

Vorteilhafterweise sind zwei entlang der Verfahrrichtung aufeinander zu und voneinander weg verfahrbare Backen vorgesehen, die jeweils einen in Verfahrrichtung verlaufenden Anlageabschnitt derart aufweisen, dass die beiden Anlageabschnitte dazu geeignet sind, sich gegenseitig abzustützen. Das Abstützen kann dabei mittelbar, beispielsweise mittels Gleitkörpern oder Gleitrollen, oder unmittelbar sein. Die Anlageabschnitte liegen dabei vorzugsweise in einer Mittellängsachse des Kolbenabschnitts sowie des Endabschnitts. Bei einer Bewegung der Backen gleiten die beiden Backen im Bereich ihrer Anlageabschnitte insbesondere unmittelbar aneinander. Eine Verdrehung der Backen um ihre Längsachse bzw. um die Längsachse des Endabschnitts ist aufgrund des Aneinandergleitens der Backen dann nicht möglich. Auf einen Endabschnitt wirkende Querkräfte werden dann nicht nur über die Exzentrizität von Endabschnitt und Kolbenabschnitt in das Gehäuse abgeleitet sondern auch über die Anlageabschnitte in die jeweils andere Backe.

Ferner ist denkbar, dass im Gehäuse ein Abstützelement vorgesehen ist, das in einen in Verfahrrichtung verlaufenden backenseitigen Führungsabschnitt eingreift. Auch hierdurch können in den Endabschnitt wirkende Querkräfte in das Gehäuse abgeleitet werden.

Das Abstützelement kann dabei quer zur Verfahrrichtung der Backen angeordnet sein und sich wenigstens abschnittsweise durch die wenigstens eine Backe erstrecken. Bei Vorsehen von zwei Backen, kann sich das Abstützelement durch beide Backen erstrecken, insbesondere im Bereich der Anlageabschnitte der Backen. Das eine Abschnittselement dient dann zur Unterstützung der Verdrehsicherung der Endabschnitte beider Backen. Das Abstützelement kann dabei bolzenartig ausgebildet sein und vorzugsweise einen kreisrunden Querschnitt und/oder einen abgeflachten Querschnitt vorsehen. Insbesondere kann es in dem Bereich, in dem es mit den Backen zusammenwirkt, abgeflacht mit zwei parallel zueinander verlaufenden Anlageflächen ausgebildet sein. Aufgrund einer vergrößerten Anlagefläche zwischen Abstützelement und den Backen, kann eine geringere Flächenpressung realisiert werden.

Das insbesondere bolzenartig ausgebildet Abstützelement kann dabei einen mit den Backen zusammenwirkenden Stellabschnitt derart aufweisen, dass die beiden Backen synchron bewegt werden. Der Stellabschnitt wirkt folglich mit beiden Backen zusammen. Er kann insbesondere um die Längsachse des bolzenartigen Abstützelements drehbar ausgebildet sein. Zum einen ist denkbar, dass der Stellabschnitt drehbar am Abstützelement angeordnet ist. Zum anderen ist denkbar, dass das Abstützelement samt Stellabschnitt um die Längsachse des Abstützelements drehbar ist. In dem Fall, in dem das Abstützelement im Bereich der Backen abgeflacht mit einander gegenüberliegenden Anlageflächen ausgebildet ist, ist ein Drehung des Abstützelement um die Längsachse nicht möglich; dann muss der Stellabschnitt drehbar um das Abstützelement ausgebildet sein.
Zur Bewegungskopplung der Backen über den Stellabschnitt ist vorteilhaft, wenn die beiden, einander zugewandten Seiten der Anlageabschnitte eine Ausnehmung aufweisen und wenn der Stellabschnitt im Bereich dieser Ausnehmung angeordnet ist. Der Stellabschnitt kann dabei quer zur Verfahrrichtung verlaufende Führungspins aufweisen, die mit backenseitigen, in der jeweiligen Ausnehmung vorgesehenen Führungsnuten zusammenwirken. Die Anordnung ist dabei vorzugsweise so, dass dann, wenn die Backen aufeinander zu oder voneinander weg bewegt werden eine Verdrehung des Stellabschnitts um die Längsachse des Abstützelements erfolgt. Die Führungspins bewegen sich folglich bei Drehung des Stellabschnitts entlang eines Kreisabschnitts. Die Führungsnuten verlaufen vorzugsweise entlang einer Geraden, die senkrecht zum Abstützelement verläuft.

Weitere Vorteile und vorteilhafte Ausgestaltungen der Erfindung sind der nachfolgenden Beschreibung zu entnehmen, anhand derer Ausführungsbeispiele der Erfindung näher beschrieben und erläutert sind. Es zeigen:
- Figur 1: einen Längsschnitt durch eine Greifeinrichtung mit ausgefahrenen Backen;
- Figur 2: die Backen der Greifeinrichtung gemäß Figur 1 ohne Gehäuse;
- Figur 3: ein Schnitt gemäß Figur 1 bei eingefahrenen Backen;
- Figur 4: die Backen gemäß Figur 3 ohne Gehäuse;
- Figur 5: eine Backe als Einzelteildarstellung;
- Figur 6: das Abstützelement gemäß Figur 1 bis 4 in Seitenansicht,
- Figur 7: einen Längsschnitt durch eine weitere Ausführungsform einer erfindungsgemäßen Greifeinrichtung,
- Figur 8: einen weiteren Längsschnitt durch Greifeinrichtung nach Figur 8, und
- Figur 9: das Abstützelement der Greifeinrichtung gemäß Figur 7 in Einzelteildarstellung.

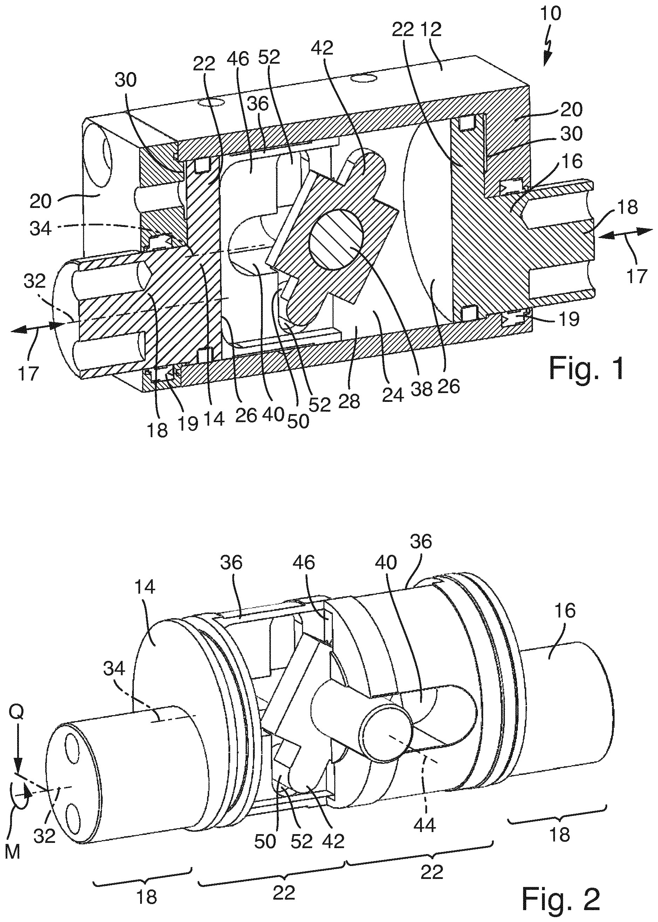

In den Figuren 1 bis 4 ist eine Greifeinrichtung 10 gezeigt, die eine Gehäuse 12 und zwei im Gehäuse 12 aufeinander zu und voneinander weg bewegbare Backen 14, 16 aufweist. Die Backen 14, 16 umfassen dabei einen zylindrischen, im Querschnitt runden Endabschnitt 18, der jeweils die jeweilige Stirnseite 20 des Gehäuses 12 durchgreift. Um die Endabschnitte 18 sind ringartige Dichtungselemente 19 vorgesehen, um ein Eindringen von Medien in das Gehäuse 12 zu unterbinden. Die jeweiligen Backen 14, 16 umfassen zudem einen im Gehäuse 12 verbleibenden Kolbenabschnitt 22. Die jeweiligen Kolbenabschnitte 22 sind in einem Zylinderraum 24 vorgesehen. Jeder der beiden Kolbenabschnitte 22 ist beidseitig druckbeaufschlagbar, wobei die einander zugewandten Seiten 26 der Kolbenabschnitte einen gemeinsamen Druckraum 28 begrenzen. Bei Druckbeaufschlagung des Druckraums 28 bewegen sich die Backen 14, 16 entlang dessen Verfahrrichtung 17 voneinander weg.

Auf der dem Druckraum 28 abgewandten Seiten begrenzen die Kolbenabschnitte 22 jeweils einen Druckraum 30. Bei Druckbeaufschlagung der Druckräume 30, beispielsweise über eine gemeinsame Druckleitung und bei Drucklosschaltung des Druckraums 28, bewegen sich die Backen aufeinander zu.

Wie insbesondere aus den Figuren 2, 4 und 5 deutlich wird, ist der jeweilige Endabschnitt 18 exzentrisch zum jeweiligen Kolbenabschnitt 22 angeordnet. Die Mittellängsachse 32 des jeweiligen Endabschnitts 18 ist dabei beabstandet zur Mittellängsachse 34 des jeweiligen Kolbenabschnitts 22 angeordnet. Dadurch kann erreicht werden, dass bei Auftreten von Querkräften Q, also Kräften, die zu einem Drehmoment M um die Mittellängsachse 32 des Endabschnitts 18 führen, eine Verdrehung des Endabschnitts 18 im Gehäuse 12 ausgeschlossen wird. Am Endabschnitt 18 auftretende Querkräfte Q werden über den jeweiligen Kolbenabschnitt 22 in das Gehäuse 12 abgeleitet. Die beiden Backen 14, 16 sehen zudem jeweils einen in Verfahrrichtung 17 verlaufenden Anlageabschnitt 36 vor, wobei sich die Anlageabschnitte 36 der beiden Backen aneinander abstützen. Die Anlageabschnitte 36 liegen dabei in einer sich in Längsrichtung, durch die Mittellängsachsen 34 und 32, verlaufenden Ebene. Durch die gegenseitige Abstützung der Backen 14, 16 im Bereich der Anlageabschnitte 36 kann eine weitere Verdrehsicherung der Endabschnitte 18 realisiert werden.

Wie aus den Figuren 1 bis 4 ferner deutlich wird, ist ein sich quer zur Verfahrrichtung 17 erstreckendes, bolzenartig ausgebildetes Abstützelement 38 vorgesehen. Das Abstützelement 38 erstreckt sich durch die Kolbenabschnitte 22 der Backen und verläuft senkrecht zu den Anlageabschnitten 36. Die Backen 14, 16 sehen dabei nutartige Führungsabschnitte 40 vor, in denen das Abstützelement 38 angeordnet ist. Zwischen den Abschnittselementen 38 und den nutartigen Führungsabschnitten 40 ist vergleichsweise wenig Spiel vorgesehen, so dass auch das Zusammenwirken des Abstützelements 38 mit den die nutartigen Führungsabschnitte 40 umgebenden Backenabschnitte eine Verdrehsicherung der Endabschnitte 18 unterstützen.

Zur Synchronisation der Bewegung der Backen 14, 16 ist am Abstützelement 38 ein Stellabschnitt 42 vorgesehen. Der Stellabschnitt 42 ist dabei um die Mittellängsachse 44 des Abstützelements 38 drehbar angeordnet.

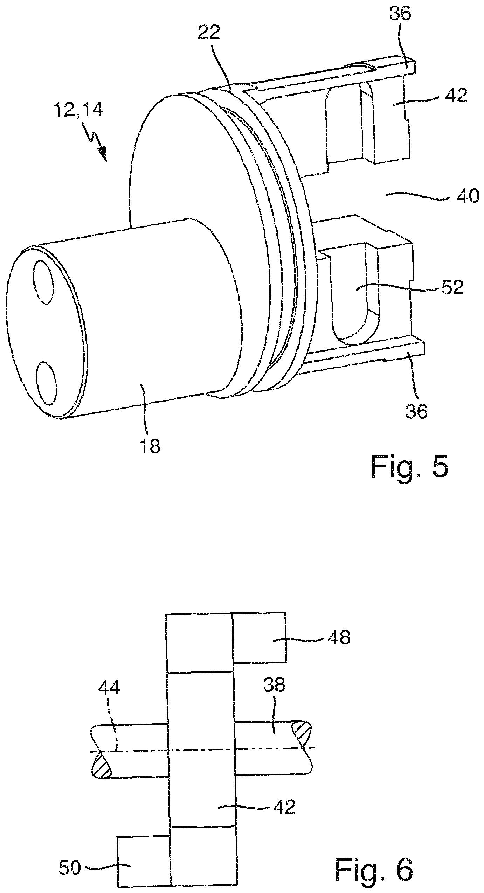

Der Stellabschnitt 42 ist ferner, wie aus den Figuren 1 bis 3 deutlich wird, in einer Ausnehmung 46 der einander zugewandten Anlageabschnitte 36 vorgesehen. Wie ferner aus Figur 6 deutlich wird, weist der Stellabschnitt 42 an seinen diametral einander gegenüberliegenden Endabschnitten in Richtung der Mittellängsachse 44 des Abschnittselements 38 verlaufende Führungspins 48 und 50 auf. Die Führungspins 48, 50 greifen dabei jeweils in eine in Figur 5 deutlich erkennbare backenseitige Führungsnut 52 ein, die sich jeweils im Bereich der Ausnehmung 46 befinden.

Ein weiterer Vorteil der in den Figuren gezeigten Greifvorrichtung ist, dass die beiden Backen 14, 16 identisch ausgebildet sind, was in er Serienfertigung zu Kostenvorteilen führt.

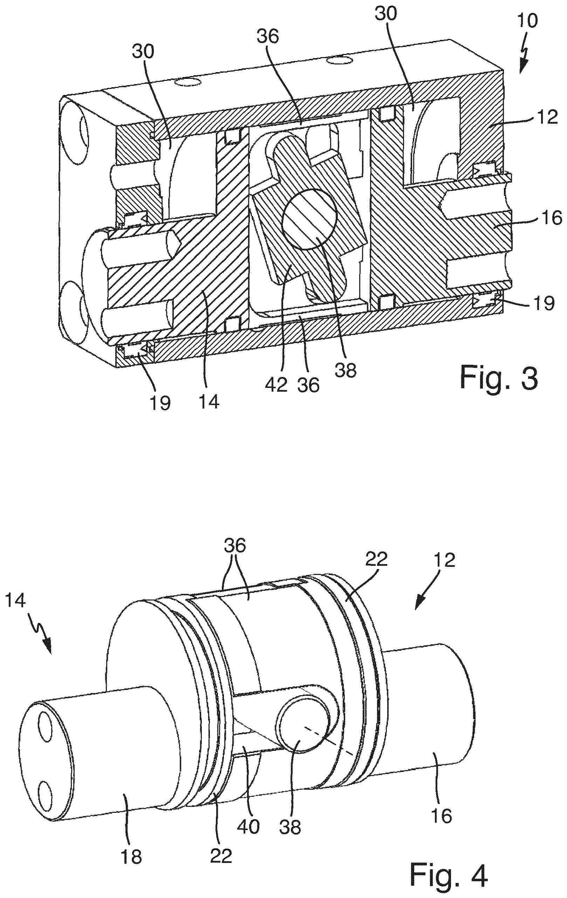

Ausgehend von der in der Figur 1 gezeigten ausgefahrenen Endposition der Backen 14, 16 werden folglich bei Druckbeaufschlagung der Druckräume 30 und bei Drucklosschaltung des Druckraums 28 die Backen 14, 16 bzw. die Endabschnitte 18 der Backen 14, 16 aufeinander zu bewegt. Dadurch wird der Stellabschnitt 42 um die Achse 44 verdreht; die Führungspins 48, 50 bewegen sich folglich auf einer Kreisbahn. Dadurch, dass die Führungspins 48, 50 in den jeweiligen Führungsnuten 52 gefangen angeordnet sind, bewegen sie sich, ausgehend von der in der Figur 1 gezeigten Lage, zunächst in den jeweiligen Führungsnuten 52 weg von der Mittellängsachse 34 bis sie eine Mittelstellung erreichen und dann wieder hin zur Mittellängsachse 34, bis sie die in Figur 3 dargestellte Endposition erreichen. Insgesamt kann hierdurch eine Synchronisierung der Bewegung der Backen 14, 16 erzielt werden. Die in den Figuren dargestellte Greifeinrichtung hat folglich den Vorteil, dass vergleichsweise hohe Greif- und Spannkräfte bei entsprechender Druckbeaufschlagung der Druckräume 30, 28 bereitgestellt werden können. Zudem kann eine sichere Verdrehsicherung der Backen 14, 16 im Grundgehäuse gewährleistet werden, wobei zudem die Backen synchron bewegt werden.

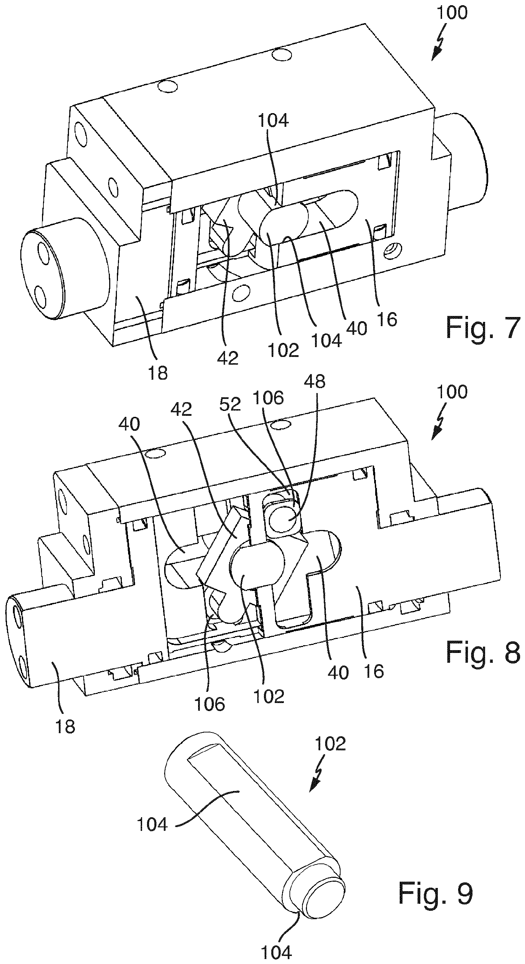

Die in den Figuren 7 und gezeigte Greifvorrichtung 100 entspricht im Wesentlichen der Greifvorrichtung 10 gemäß den Figuren 1 bis 6, wobei entsprechende Bauteile entsprechende Bezugszeichen aufweisen. Die Greifvorrichtung 100 unterscheidet sich von der in den Figuren 1 bis 5 gezeigten Greifvorrichtung 10 dadurch, dass das in der Figur 9 gezeigte bolzenartige Abstützelement 102 abgeflacht ausgebildet ist. Insbesondere in dem Bereich, in dem das Abstützelement mit den Backen zusammenwirkt, weist es zwei parallel zueinander verlaufenden Anlageflächen 104 auf. Der Abstand der Anlageflächen 102 ist dabei geringfügig kleiner als das Öffnungsmaß der das Abstützelement 102 aufnehmenden Führungsabschnitte 40. Damit wird eine vergrößerte Auflagefläche zwischen dem Abstützelement102 und den Backen 16, 18 bereitgestellt, wodurch eine geringere Flächenpressung zwischen Abstützelement 102 und Backen beim Verfahren der Backen 16, 18 realisiert werden kann.

Wie aus Figur 8 deutlich wird, weisen sie Führungspins 48, 50 bei der Greifvorrichtung 100 in den Bereichen, in denen sie in die Führungsnuten 52 eingreifen ein auf den Führungspins 48, 50 drehbar angeordnetes, im Wesentlichen rechteckig ausgebildetes Gleitstück 106 auf. Das Gleitstück 106 weist dabei eine Breite auf, die geringfügig kleiner ist als das Öffnungsmaß der Führungsnuten 52. Dadurch können verbesserte Gleiteigenschaften und insbesondere eine geringere Flächenpressung zwischen den Führungspins 48, 50 und Backen 16, 18 bereitgestellt werden.

## Patentansprüche

1. Greifeinrichtung (10, 100) mit einem Gehäuse (12) und mit wenigstens einer im Gehäuse (12) entlang einer Verfahrrichtung (17) verfahrbaren Backe (14, 16), wobei die Backe (14, 16) einen Kolbenabschnitt (22) mit einem zylindrischen Querschnitt aufweist, der einen im Gehäuse (12) vorgesehenen Druckraum (28, 30) begrenzt, und wobei die Backe (14, 16) lediglich einen das Gehäuse durchgreifenden Endabschnitt (18) mit einem zylindrischen Querschnitt aufweist, dessen Mittellängsachse (32) beabstandet und parallel zur Mittellängsachse (34) des Kolbenabschnitts (22) verläuft, so dass der Endabschnitt (18) exzentrisch zum Kolbenabschnitt (22) angeordnet ist.

2. Greifeinrichtung (10) nach Anspruch 1, **dadurch gekennzeichnet, dass** der Kolbenabschnitt (22) eine Mantelfläche aufweist und dass der Endabschnitt (18) eine Mantelfläche aufweist, wobei die Mantelfläche des Kolbenabschnitts (22) die Mantelfläche des Endabschnitts (18) umhüllt.

3. Greifeinrichtung (10) nach Anspruch 1 oder 2, **dadurch gekennzeichnet, dass** der Kolbenabschnitt (22) und/oder der Endabschnitt (18) im Querschnitt rund, kreisrund, oval oder rechteckig mit abgerundeten Ecken ist.

4. Greifeinrichtung (10, 100) nach Anspruch 1, 2 oder 3, **dadurch gekennzeichnet, dass** zwei entlang der Verfahrrichtung (17) aufeinander zu und voneinander weg verfahrbare Backen (14, 16) vorgesehen sind, die jeweils einen in Verfahrrichtung (17) verlaufenden Anlageabschnitt (36) derart aufweisen, dass die beiden Anlageabschnitte (36) dazu geeignet sind, sich gegenseitig abzustützen.

5. Greifeinrichtung (10, 100) nach einem der vorhergehenden Ansprüche, **dadurch gekennzeichnet, dass** am Gehäuse (12) ein Abstützelement (38) vorgesehen ist, das in einen in Verfahrrichtung verlaufenden backenseitigen Führungsabschnitt (40) eingreift.

6. Greifeinrichtung (10, 100) nach Anspruch 5, **dadurch gekennzeichnet, dass** das Abstützelement (38) quer zur Verfahrrichtung (17) angeordnet ist und sich wenigstens abschnittsweise durch die wenigstens eine Backe (14, 16) erstreckt.

7. Greifeinrichtung (10, 100) nach Anspruch 5 oder 6 sowie Ansprüche 4 oder 5, **dadurch gekennzeichnet, dass** das Abstützelement (38) senkrecht zu den Anlageabschnitten (36) und diese durchgreifend angeordnet ist.

8. Greifeinrichtung (10, 100) nach Anspruch 5, 6 oder 7, **dadurch gekennzeichnet, dass** das Abstützelement (38) bolzenartig ausgebildet ist und/oder wenigstens in dem Bereich, in dem es mit den Backen (16, 18) zusammenwirkt, abgeflacht ausgebildet ist.

9. Greifeinrichtung (10, 100) nach einem der Ansprüche 5 bis 8, **dadurch gekennzeichnet, dass** zwei entlang der Verfahrrichtung (17 aufeinander zu und voneinander weg verfahrbare Backen (14, 16) vorgesehen sind, und dass das Abstützelement (38) einen mit den Backen (14, 16) zusammenwirkenden Stellabschnitt (42) derart aufweist, dass die beiden Backen (14, 16) synchron bewegt werden.

10. Greifeinrichtung (10, 100) nach Anspruch 9, **dadurch gekennzeichnet, dass** die beiden, einander zugewandten Seiten der Anlageabschnitte (36) eine Ausnehmung (46) aufweisen und dass der Stellabschnitt (42) im Bereich der Ausnehmung (46) angeordnet ist.

11. Greifeinrichtung (10, 100) nach Anspruch 9 oder 10, **dadurch gekennzeichnet, dass** der Stellabschnitt (42) quer zur Verfahrrichtung (17) verlaufende Führungspins (48, 50) aufweist, die mit backenseitigen Führungsnuten (52) zusammenwirken.

12. Greifeinrichtung (10, 100) nach Anspruch 11, **dadurch gekennzeichnet, dass** die Führungspins (48, 50) bei Drehung des Stellabschnitts (42) sich entlang eines Kreisabschnitts bewegen und dass sich die Führungsnuten (52) entlang einer Geraden senkrecht zur Bewegungsrichtung (17) erstrecken.

13. Greifeinrichtung (10, 100) nach Anspruch 10 oder 11, **dadurch gekennzeichnet, dass** die Führungspins (48, 50) drehbar angeordnete Gleitstücke (106) aufweisen, die in die Führungsnuten (52) geführt sind.

## Claims

1. A gripper device (10, 100), having a housing (12) and having at least one jaw (14, 16) movable in the housing (12) along a movement direction (17), wherein the jaw (14, 16) has a piston portion (22) having a cylindrical cross section, which piston portion defines a pressure chamber (28, 30) provided in the housing (12), and wherein the jaw (14, 16) has only one end portion (18) having a cylindrical cross section that reaches through the housing, the longitudinal center axis (32) of which end portion extends spaced apart from and parallel to the longitudinal center axis (34) of the piston portion (22), so that the end portion (18) is located eccentrically to the piston portion (22).

2. The gripper device (10) of claim 1, **characterized in that** the piston portion (22) has a jacket face, and that the end portion (18) has a jacket face, and the jacket face of the piston portion (22) surrounds the jacket face of the end portion (18).

3. The gripper device (10) of claim 1 or 2, **characterized in that** the piston portion (22) and/or the end portion (18) is, in cross section, round, circular, oval, or rectangular with rounded edges.

4. The gripper device (10, 100) of claim 1, 2 or 3, **characterized in that** two jaws (14, 16), movable toward and away from one another in the movement direction (17) are provided, which each have an abutment portion (36) extending in the movement direction (17) in such a way that the two abutment portions (36) are suitable for bracing one another.

5. The gripper device (10, 100) of one of the foregoing claims, **characterized in that** on the housing (12) a bracing element (38) is provided, which engages a guide portion (40) extending in the movement direction on the side toward the jaw.

6. The gripper device (10, 100) of claim 5, **characterized in that** the bracing element (38) is located transversely to the movement direction (17) and in at least some portions extends through the at least one jaw (14, 16).

7. The gripper device (10, 100) of claim 5 or 6 as well as claim 4 or 5, **characterized in that** the bracing element (38) is located perpendicular to the abutment portions (36) and reaching through them.

8. The gripper device (10, 100) of claim 5, 6 or 7, **characterized in that** the bracing element (38) is embodied in boltlike fashion and/or, at least in the region in which it cooperates with the jaws (16, 18), is embodied in flattened fashion.

9. The gripper device (10, 100) of one of claims 5 through 8, **characterized in that** two jaws (14, 16), movable toward and away from one another in the movement direction (17), are provided; and that the bracing element (38) has an adjusting portion (42) cooperating with the jaws (14, 16) in such a way that the two jaws (14, 16) are moved synchronously.

10. The gripper device (10, 100) of claim 9, **characterized in that** the two sides, facing one another, of the abutment portions (36) have a recess (46); and that the adjusting portion (42) is located in the vicinity of the recess (46).

11. The gripper device (10, 100) of claim 9 or 10, **characterized in that** the adjusting portion (42) has guide pins (48, 50) extending transversely to the movement direction (17), which pins cooperate with guide grooves (52) on the side toward the jaws.

12. The gripper device (10, 100) of claim 11, **characterized in that** the guide pins (48, 50) move along a circular portion upon rotation of the adjusting portion (42); and that the guide grooves (52) extend along a straight line that is perpendicular to the direction of motion (17).

13. The gripper device (10, 100) of claim 10 or 11, **characterized in that** the guide pins (48, 50) have rotatably located slide pieces (106), which are guided in the guide grooves (52).

## Revendications

1. Dispositif de préhension (10, 100) comprenant un boîtier (12) et au moins une mâchoire (14, 16) mobile dans le boîtier (12) le long d'une direction de déplacement (17), la mâchoire (14, 16) comprenant une partie piston (22) pourvue d'une section transversale cylindrique, qui délimite une chambre de pression (28, 30) prévue dans le boîtier (12), et la mâchoire (14, 16) présentant uniquement une partie d'extrémité (18) traversant le boîtier et pourvue d'une section transversale cylindrique, partie d'extrémité dont l'axe longitudinal médian (32) s'étend à distance de l'axe longitudinal médian (34) de la partie piston (22) et parallèlement à celui-ci, de sorte que la partie d'extrémité (18) est agencée de manière excentrique par rapport à la partie piston (22).

2. Dispositif de préhension (10) selon la revendication 1, **caractérisé en ce que** la partie piston (22) présente une surface extérieure et **en ce que** la partie d'extrémité (18) présente une surface extérieure, la surface extérieure de la partie piston (22) entourant la surface extérieure de la partie d'extrémité (18).

3. Dispositif de préhension (10) selon la revendication 1 ou 2, **caractérisé en ce que** la partie piston (22) et/ou la partie d'extrémité (18) présentent une section transversale ronde, circulaire, ovale ou rectangulaire à bords arrondis.

4. Dispositif de préhension (10, 100) selon la revendication 1, 2 ou 3, **caractérisé en ce que** deux mâchoires (14, 16) mobiles en direction l'une de l'autre et à distance l'une de l'autre le long de la direction de déplacement (17) sont prévues, lesquelles présentent chacune une partie d'appui (36) s'étendant dans la direction de déplacement (17), de telle manière que les deux parties d'appui (36) sont adaptées à se soutenir mutuellement.

5. Dispositif de préhension (10, 100) selon l'une quelconque des revendications précédentes, **caractérisé en ce qu'**un élément de support (38), qui s'insère dans une partie de guidage (40) côté mâchoire s'étendant dans la direction de déplacement, est prévu sur le boîtier (12).

6. Dispositif de préhension (10, 100) selon la revendication 5, **caractérisé en ce que** l'élément de support (38) est agencé transversalement à la direction de déplacement (17) et s'étend au moins en partie à travers la ou les mâchoires (14, 16).

7. Dispositif de préhension (10, 100) selon la revendication 5 ou 6 ainsi que selon les revendications 4 ou 5, **caractérisé en ce que** l'élément de support (38) est agencé perpendiculairement aux parties d'appui (36) et de manière à traverser celles-ci.

8. Dispositif de préhension (10, 100) selon la revendication 5, 6 ou 7, **caractérisé en ce que** l'élément de support (38) est du type boulon et/ou est aplati au moins dans la zone dans laquelle il coopère avec les mâchoires (16, 18).

9. Dispositif de préhension (10, 100) selon l'une quelconque des revendications 5 à 8, **caractérisé en ce que** deux mâchoires (14, 16) mobiles l'une vers l'autre et l'une à distance de l'autre le long de la direction de déplacement (17) sont prévues, et **en ce que** l'élément de support (38) présente une partie de commande (42) coopérant avec les mâchoires (14, 16), de telle manière que les deux mâchoires (14, 16) sont déplacées de manière synchrone.

10. Dispositif de préhension (10, 100) selon la revendication 9, **caractérisé en ce que** les deux faces des parties d'appui (36) tournées l'une vers l'autre présentent un évidement (46) et **en ce que** la partie de commande (42) est agencée dans la zone de l'évidement (46).

11. Dispositif de préhension (10, 100) selon la revendication 9 ou 10, **caractérisé en ce que** la partie de commande (42) présente des broches de guidage (48, 50) s'étendant transversalement à la direction de déplacement (17), qui coopèrent avec des rainures de guidage (52) côté mâchoire.

12. Dispositif de préhension (10, 100) selon la revendication 11, **caractérisé en ce que** les broches de guidage (48, 50), lors de la rotation de la partie de commande (42), se déplacent le long d'une partie circulaire et **en ce que** les rainures de guidage (52) s'étendent perpendiculairement à la direction de déplacement (17) le long d'une droite.

13. Dispositif de préhension (10, 100) selon la revendication 10 ou 11, **caractérisé en ce que** les broches de guidage (48, 50) présentent des pièces coulissantes (106) montées en rotation, qui sont guidées dans les rainures de guidage (52).
